# EUROPEAN PATENT APPLICATION

(11) **EP 4 613 372 A1**
(43) Date of publication of application: **10.09.2025**
(21) Application number: 24182831.8
(22) Date of filing: 18.06.2024
(51) Int. Cl.: B01J 21/04, B01J 29/08, C10G 11/05, C10G 11/18

(54) **RESID FCC CATALYST COMPOSITION AND PROCESS FOR PREPARATION THEREOF**

(30) Priority: 07.03.2024 IN 202441016308
(71) Applicant: Hindustan Petroleum Corporation Limited, Bengaluru 560067 (IN)
(72) Inventor: SHARMA, Poonam, 560067 Bengaluru (IN); LOGANATHAN, Kumaresan, 560067 Bengaluru (IN); KUNIYIL, Arun, 560067 Bengaluru (IN); KUMAR, Pramod, 560067 Bengaluru (IN); SUNDARARAMAN, Sriram, 560067 Bengaluru (IN); MAHESHWARI, Vipul Kumar, 560067 Bengaluru (IN)
(74) Representative: V.O.

(57) **Abstract**

The present invention discloses a resid FCC (RFCC) catalyst composition and a process for preparation thereof. More particularly, the present invention discloses a catalytic cracking catalyst composition designed for the RFCC process, characterized by reduced coke, bottom cracking, and dry gas formation. The present invention also discloses a process for preparation of the catalyst composition suitable for larger molecules of resid oil, ensuring minimal coke and dry gas production during the resid oil cracking process.

## Description

### FIELD OF THE INVENTION

The present invention discloses a resid FCC (RFCC) catalyst composition and a process for preparation thereof. More particularly, the present invention discloses a catalytic cracking catalyst composition designed for the RFCC process, characterized by reduced coke, bottom cracking, and dry gas formation. The present invention also discloses a process for preparation of the catalyst composition suitable for larger molecules of resid oil, ensuring minimal coke and dry gas production during the resid oil cracking process.

### BACKGROUND OF THE INVENTION

Residual oil is produced in a vacuum distillation column in a refinery operation. Due to the low market value of resid oil, it became more important to convert it into high-value products according to market demand like petrochemicals and petroleum fuels. The residue fluid catalytic cracking (RFCC) unit is used to convert the residual oil into more valuable products such as gasoline, light olefins, and light cycle oil (LCO). The process is carried out over the RFCC catalyst. The modern RFCC catalyst is a composite of zeolite, matrix, binder, and different additives. As a zeolite, HY zeolite was found to be more active to crack the heavy hydrocarbon molecule into lighter and more valuable products. There are some hardships to process the resid oil due to its physical form and high metal contents (Ni (≥ 5 ppm), V (≥ 4 ppm), and Na) which leads to the deactivation of the processing catalyst. The metals can deactivate the catalyst in many ways, for example, in some processes the metals bind on the active site of the catalyst and block them while sometimes it's get deposited inside the porous support where the cracking reaction is taking place. It is also observed that the thermal stability of catalysts reduces in the presence of metals at a higher temperature. The active sites of catalyst are responsible for product distribution. After blocking of these sites with metals, the selectivity and distribution of the desired products will be altered due to dehydrogenation and coking reaction over the metal site which is not desirable. Therefore, a catalyst with sufficient activity, gasoline selectivity, and stability plays a crucial role in the FCC process. A catalyst should have adequate acidity, high porosity, and good thermal stability to crack the feed components, accommodate additional metals/coke and withstand the relatively severe conditions. In addition to that, the high porosity would diminish the diffuse limitation of bigger molecules of resid oil.

Recently, boron-based technology (BBT, BoroflexTM, and BorocatTM) and high rare earth (ResidCrackeR) catalyst technologies are developed to handle resid feed in FCC to improve bottom cracking and coke selectivity. These technologies gave high conversion & coke selectivity with undesired dry gas yield and lower octane gasoline. Some of the prior art documents are given below:
WO-A-2013/074191 disclosed a process and catalyst for cracking residual oil to increase the propylene yield. The catalyst was composed of crystalline HZSM-5 zeolite (10 to 25 % and more) a binder, a filler, and a metal trap. The amount of metal trap component was in the range of 0.5 to 50 % to trap the metal. As a metal trapping agent, CeO₂, CaCOs, ferric oxide, and phosphorus pentoxide were used. The catalyst contained 0.1 to 3.5 % rare earth in the composition. The inorganic oxide contained in the catalytic cracking catalyst of the present invention can be Al₂O₃, SiO₂, AlO(OH), or AlO₃-SiO₂. The inorganic oxide serves as a binder for producing the catalyst. At the time of manufacture, a precursor in the form of sol, gel or solution containing Al₂O₃, SiO₂, AlO(OH), or AlO₃-SiO₂ is used.

EP-A-2 946 832 disclosed a catalytic cracking catalyst for RFCC process with maximized diesel yield which includes a clay matrix and an inorganic oxide, wherein pores with a diameter greater than 20 Å are controlled, to be greater than 80 % by volume of the total pore count of the catalyst.

Amini *et al.* reported a nano zeolite-based RFCC catalyst, composed of different contents of HY zeolite having two sizes and colloidal silica as an inactive matrix. The contents of nano zeolite were in the range of 10 to 50 % in the final synthesized catalyst. The catalyst with 30 wt.% nano zeolites gave the 32 wt.% gasoline yield.

Karthikeyani *et al.* invented a catalyst comprising of large pore RE-Y Zeolite, ZSM-5 component, and pseudo-boehmite for upgrading feed streams containing high metal concentration. The catalyst gave 40 000-60 000 ppm Ni tolerance with 16.54 % propylene yield.

US-B-9 796 932 described a fluid catalytic cracking (FCC) composition comprising two types of particles whereas the first particle/first matrix comprised of boron oxide components and the second particle/second matrix comprising a phosphorous component. The FCC used for cracking of resid feed containing high V and Ni, resulting in lower hydrogen and coke yields with increased gasoline yield and bottom cracking.

CN-A-103 007 981 disclosed a residual oil catalytic cracking catalyst, which comprises, by weight, 15-35 % of a REUSY molecular sieve, 5-25 % of a silicon-magnesium glue, 0-5 % of a MFI structure shape selective molecular sieve, 15-25 % of boehmite or diaspore, 2-10 % of an inorganic oxide binder, and 20-60 % of clay. The catalytic cracking catalyst has characteristics of large matrix-specific surface area, suitable acidity, metal nickel, and vanadium passivation, excellent heavy oil conversion capacity, and catalytic cracking coke yield reducing.

US-B-10 066 170 disclosed a composition comprising discrete metal trap particles comprising: a catalytically inactive matrix; and a rare earth oxide dispersed within the matrix, the rare earth oxide comprising a mixture of oxide and rare earth aluminate salts; and an FCC catalyst physically blended with the metal trap particles.

WO-A-2022/051283 disclosed a metal trapping additive that comprises calcium, boron and magnesia-alumina. The invention also includes a process for the catalytic cracking of feedstock comprising contacting the feedstock under catalytic cracking conditions with an FCC catalyst and the metal trapping additive.

US-B-8 632 674 provides a catalyst mixture comprising FCC catalysts and a metal passivator/trap and use thereof in trapping metal contaminants during the catalytic cracking of hydrocarbon feedstocks.

US-B-9 796 932 disclosed an FCC catalyst composition for cracking hydrocarbons, the FCC catalyst composition comprising: a first particle type comprising one or more boron oxide components, and a first matrix component wherein the first particle type does not incorporate a zeolite; and a second particle type comprising a second matrix component, a phosphorus component, and 20 % to 95 % by weight of a zeolite component; wherein the second particle type is different from the first particle type and the first particle type and second particle type are mixed together.

Still there was a need to develop RFCC catalyst composition for providing high conversion, coke selectivity and octane gasoline along with reduced or less dry gas yield. Further, there was a need to develop RFCC catalyst having adequate acidity, high porosity, and good thermal stability to crack the resid feed components, accommodate additional metals/coke and withstand the severe conditions.

RFCC catalyst composition of the present invention used two methods, *i.e*., bottom-up and top-down methods. In a bottom-up approach, biowaste such as lignin or biochar is used as a template to increase the porosity, whereas in a top-down approach, desilication or dealumination is used to increase the porosity.

### OBJECTIVE OF THE PRESENT INVENTION

The main objective of the present invention is to prepare a catalyst composition for providing high conversion, coke selectivity and octane gasoline along with reduced coke, bottom cracking, and dry gas formation.

Another objective of the present invention is to prepare RFCC catalyst composition for providing adequate acidity, high porosity, and good thermal stability to crack the resid feed components, accommodate additional metals/coke and withstand the severe conditions.

Another objective of the present invention is to create hierarchical mesopores in raw materials using the desilication method to reduce the diffusion limitation of heavy hydrocarbons of Resid oil.

One another objective of the present invention is to create hierarchical mesopores using biochar during the preparation of the resid cracking catalyst (RFCC) to reduce the diffusion limitation of heavy hydrocarbons of resid oil.

Yet another objective of the present invention is to use an active compound Si-doped alumina or desilicated alumina, monometallic (La and Ce) doped-alumina, and bi-metallic (La-Ce) doped alumina in a matrix material to increase metal tolerance.

### SUMMARY OF THE PRESENT INVENTION

The present invention discloses a resid fluid catalytic cracking (RFCC) catalyst composition, comprising: (a) high dense alumina in a range of 2 wt.% to 12 wt.%; (b) silica or alumina or rare-earth doped alumina in a range of 5 wt.% to 25 wt.%; (c) binder grade alumina in a range of 5 wt.% to 35 wt.%; (d) colloidal silica in a rage of 5 wt.% to 25 wt.%; (e) clay in a range of 10 wt.% to 50 wt.%; (f) biomass waste in a range of 0.5 wt.% to 10 wt.%; and (g) rare-earth Y zeolite in a range of 1 wt.% to 40 wt.%.

The present invention also discloses a process for preparation of resid fluid catalytic cracking (RFCC) catalyst composition, comprising: (i) mixing of high dense alumina, silica or rare-earth doped alumina, binder grade alumina, colloidal silica, clay and biomass waste followed by milling for 3-6 hours to form a uniform slurry; (ii) peptizing the slurry with monoprotonic acid to obtain a peptized slurry; (iii) mixing rare-earth Y zeolite (REY-zeolite) and water to obtain a uniform zeolite slurry; (iv) mixing the peptized slurry with the zeolites slurry for 1-3 hours to make a final slurry; (v) spray drying the final slurry at an inlet temperature of 300-400 °C and an outlet temperature of 150-200 °C to form spherical microsphere of spray-dried catalyst; (vi) calcining the spray-dried catalyst at 500-600 °C for 1-3 hours in an inert atmosphere to form the RFCC catalyst composition.

In a feature of the present invention, the resid fluid catalytic cracking (RFCC) catalyst composition, comprising: (a) high dense alumina in a range of 2 wt.% to 12 wt.%; (b) silica or alumina or doped alumina in a range of 5 wt.% to 25 wt.%; (c) binder grade alumina in a range of 5 wt.% to 35 wt.%; (d) colloidal silica in a rage of 5 wt.% to 25 wt.%; (e) clay in a range of 10 wt.% to 50 wt.%; (f) biomass waste in a range of 0.5 wt.% to 10 wt.%; and (g) rare-earth Y zeolite in a range of 1 wt.% to 40 wt.%.

In a feature of the present invention, the rare-earth doped alumina has rare earth element in the range of 1 wt.% to 15 wt.%; wherein the rare-earth Y zeolite has rare earth element in the range of 1 wt.% to 20 wt.%; and wherein the rare-earth element is selected from a group consisting of lanthanum and cerium.

In a feature of the present invention, the high dense alumina is selected from boehmite, gamma alumina and alpha boehmite, and having bulk density above 0.9 g/cc.

In a feature of the present invention, the binder grade alumina is pseudoboehmite; wherein the biomass waste is selected from a group consisting of lignin and biochar; and wherein the clay is selected from a group consisting of kaolin clay, bentonite, mulite and attapulgite.

In a feature of the present invention, the silica-doped alumina and the clay are in desilicated form; and the rare earth-doped alumina is in dealuminated form.

In a feature of the present invention, volume distribution of pores of the catalyst composition with diameters 0-30 Å is 2 to 5 %, 30-60 Å is 10 to 20 %, and more than 50 Å are 60 to 80 %.

In a feature of the present invention, the mono-protonic acid is selected from a group consisting of HCOOH, CH₃COOH, HNOs, and HCl.

### DETAILED DESCRIPTION OF THE PRESENT INVENTION

The present invention discloses a resid FCC (RFCC) catalyst composition and a process for preparation thereof.

The present invention discloses a catalytic cracking catalyst composition designed for the RFCC process, characterized by reduced coke, bottom cracking, and dry gas formation. The present invention also discloses a process for preparation of the catalyst composition suitable for larger molecules of resid oil, ensuring minimal coke and dry gas production during the resid oil cracking process.

The catalyst composition of the present invention features a hierarchical matrix incorporating active components, wherein the hierarchical matrix enhances the average pore diameter (> 50 Å) which increases the diffusion of bigger molecules, while the active component diminishes coke, dry gas, and increases metal tolerance. The volume of pores with a diameter greater than 50 Å was 15 % higher than commercial catalysts. The volume distribution of pores with diameters 0-30 Å was 2 to 5 %, 30-60 Å was 10 to 20 %, and more than 50 Å of pore diameters were 60 to 80 %.

In an aspect of the present invention, the present invention discloses a resid fluid catalytic cracking (RFCC) catalyst composition, comprising:
(a) high dense alumina in a range of 2 wt.% to 12 wt.%;
(b) silica or alumina or rare-earth doped alumina in a range of 5 wt.% to 25 wt.%;
(c) binder grade alumina in a range of 5 wt.% to 35 wt.%;
(d) colloidal silica in a rage of 5 wt.% to 25 wt.%;
(e) clay in a range of 10 wt.% to 50 wt.%;
(f) biomass waste in a range of 0.5 wt.% to 10 wt.%; and
(g) rare-earth Y zeolite in a range of 1 wt.% to 40 wt.%.

In another aspect of the present invention, the present invention discloses a process for preparation of resid fluid catalytic cracking (RFCC) catalyst composition, comprising:
i) mixing of high dense alumina, silica or rare-earth doped alumina, binder grade alumina, colloidal silica, clay and biomass waste followed by milling for 3-6 hours to form a uniform slurry;
ii) peptizing the slurry with monoprotonic acid to obtain a peptized slurry;
iii) mixing rare-earth Y zeolite (REY-zeolite) and water to obtain a uniform zeolite slurry;
iv) mixing the peptized slurry with the zeolites slurry for 1-3 hours to make a final slurry;
v) spray drying the final slurry at an inlet temperature of 300-400 °C and an outlet temperature of 150-200 °C to form spherical microsphere of spray-dried catalyst;
vi) calcining the spray-dried catalyst at 500-600 °C for 1-3 hours in an inert atmosphere to form the RFCC catalyst composition.

In an embodiment of the present invention, the resid fluid catalytic cracking (RFCC) catalyst composition, comprising: (a) high dense alumina in a range of 2 wt.% to 12 wt.%; (b) silica or alumina or doped alumina in a range of 5 wt.% to 25 wt.%; (c) binder grade alumina in a range of 5 wt.% to 35 wt.%; (d) colloidal silica in a rage of 5 wt.% to 25 wt.%; (e) clay in a range of 10 wt.% to 50 wt.%; (f) biomass waste in a range of 0.5 wt.% to 10 wt.%; and (g) rare-earth Y zeolite in a range of 1 wt.% to 40 wt.%.

In an embodiment of the present invention, the rare-earth doped alumina has rare earth element in the range of 1 wt.% to 15 wt.%; wherein the rare-earth Y zeolite has rare earth element in the range of 1 wt.% to 20 wt.%; and wherein the rare-earth element is selected from a group consisting of lanthanum and cerium.

In an embodiment of the present invention, the high dense alumina is selected from boehmite, gamma alumina and alpha boehmite, and having bulk density above 0.9 g/cc.

In an embodiment of the present invention, the binder grade alumina is pseudoboehmite; wherein the biomass waste is selected from a group consisting of lignin and biochar; and wherein the clay is selected from a group consisting of kaolin clay, bentonite, mulite and attapulgite.

In an embodiment of the present invention, the silica-doped alumina and the clay are in desilicated form; and the rare earth-doped alumina is in dealuminated form.

In an embodiment of the present invention, volume distribution of pores of the catalyst composition with diameters 0-30 Å is 2 to 5 %, 30-60 Å is 10 to 20 %, and more than 50 Å are 60 to 80 %.

In an embodiment of the present invention, the mono-protonic acid is selected from a group consisting of HCOOH, CH₃COOH, HNOs, and HCl.

### EXAMPLES

### Example-1: Preparation of hierarchical matrix:

Si-doped alumina, Ce-doped alumina, and La-doped alumina were used as matrix material and treated with an alkaline solution of NaOH or acidic solution of HCl to create hierarchical matrix which can be connected mesopore and micropore. The concentration of NaOH/HCl, time, and temperature of desilication/ dealumination were optimized. 12.5 g of NaOH was dissolved in 250 g DM water. The pH of the solution was maintained between 8-13. 50 g Kaolin clay was added to 100 ml NaOH solution. The resulting solution was kept at 75 °C for 0.5 hour. The alkaline solution of clay was filtered and washed with DM water to bring the pH to less than or equal to 7. The washed sample was dried at 110 °C for 12 hour and calcined at 550 °C for 2 hours.

Similarly, 40 % / 20 % / 10 % Si-doped alumina was desilicated using a NaOH solution to enhance the pore volume and pore size in the Si-doped alumina. 25 g Si-doped alumina was dissolved in 70 ml of NaOH solution and stirred for 10 minutes at 75 °C. The alkaline solution of Si-doped alumina was filtered and washed with DM water to bring the pH to less than or equal to 7. The washed sample was dried at 110 °C for 12 hours and calcined at 550 °C for 2 hours. The results of desilication are discussed in Example 6.

### Example-2: Preparation of modified Y-zeolite:

100 g Y-zeolite was dissolved in an alkaline NaOH solution (0.1 M) for 5 to 10 minutes at room temperature. The solution was filtered and washed with DM water to bring the pH to less than or equal to 7. The washed zeolite was dried at 110 °C for 12 hours. The dried sample was treated with ammonia solution three times and filtered and washed with DM water. Further, the sample was dried and calcined at 550 °C for 3 hours to get HY zeolite. The calcined HY zeolite was treated with rare earth metals (1 wt.% to 20 wt.%) to get the final desired loading of metals.

### Example-3: Preparation of catalyst for the present invention

21 g of high dense alumina, 19 g of Si or La-Ce or Ce-doped alumina, 42 g of binder grade alumina, 80 g of colloidal silica, and 50 g of kaolin clay were mixed to form uniform slurry, and milled at 3D wet ball for 4 hours. The milled slurry was peptized with mono-protonic acid such as HCOOH. 65 g of commercial REY-zeolite is mixed with 81 g of DM water to form a uniformed zeolite slurry. The peptized slurry was mixed with zeolite slurry for 2 hours to make the final slurry. The slurry was spray dried at an inlet temperature of 380 °C and outlet temperature of 170 °C to form a spherical microsphere in a co-current spray dryer unit. The spray-dried catalyst was calcined at 550 °C for 2 hours to form final RFCC catalyst.

### Example-4:

21 g of high-dense alumina, 19 g of desilicated Si or dealuminated La-Ce or Ce-doped alumina, 42 g of binder grade alumina, 80 g of colloidal silica, and 50 g of desilicated kaolin clay from Example-1 were mixed to form uniform slurry, and milled at 3D wet ball for 4 hours. The milled slurry was peptized with mono-protonic acid such as HCOOH. 65 g of modified REY-zeolite from Example 2 is mixed with 81 g of DM water to form a uniformed zeolite slurry. The peptized slurry was mixed with zeolite slurry for 2 hours to make the final slurry. The slurry was spray dried at inlet temperature of 380 °C and outlet temperature of 170 °C to form a spherical microsphere in a co-current spray dryer unit. The spray-dried catalyst was calcined at 550 °C for 2 hours to form final RFCC catalyst.

### Example-5:

21 g of high-dense alumina, 19 g of Si or La-Ce or Ce-doped alumina, 42 g of binder grade alumina, 80 g of colloidal silica, and 50 g of kaolin clay were mixed to form a uniform slurry. 3 g biomass waste like lignin or biochar was added to uniform slurry and milled at 3D wet ball for 4 h. The milled slurry was peptized with mono-protonic acid such as HCOOH. 65 g of REY-zeolite from Example 2 is mixed with 81 g of DM water to form a uniformed zeolite slurry. The peptized slurry was mixed with zeolite slurry for 2 h to make final slurry. The slurry was spray dried at inlet temperature of 380 °C and outlet temperature of 170 °C to form spherical microsphere in a co-current spray dryer unit. The spray-dried catalyst was calcined at 550 °C for 2 h to form final RFCC catalyst.

### Example-6:

21 g of high-dense alumina, 19 g of desilicated Si or dealuminated La-Ce or Ce-doped alumina, 42 g of binder-grade alumina, 80 g of colloidal silica, and 50 g of desilicated kaolin clay were mixed to form uniform slurry. 3 g biomass waste like lignin or biochar was added to uniform slurry and milled at 3D wet ball for 4 hours. The milled slurry was peptized with mono-protonic acid such as HCOOH. 65 g commercial REY-zeolite is mixed with 81 g of DM water to form uniformed zeolite slurry. The peptized slurry was mixed with zeolites slurry for 2 hours to make final slurry. The slurry was spray dried at inlet temperature of 380 °C and outlet temperature of 170 °C to form a spherical microsphere in a co-current spray dryer unit. The spray-dried catalyst was calcined at 550 °C for 2 hours in an inert atmosphere to form the final RFCC catalyst. The biochar was burnt off during the calcination process, leaving behind hierarchical pores.

### Example-7:

21 g of high dense alumina, 19 g of desilicated Si or dealuminated La-Ce or Ce-doped alumina, 42 g of binder grade alumina, 80 g of colloidal silica, and 50 g of desilicated kaolin clay were mixed to form uniform slurry. 3 g biomass waste like lignin or biochar was added to uniform slurry and milled at 3D wet ball for 4 hours. The milled slurry was peptized with monoprotonic acid. 65 g of REY-zeolite from Example 2 is mixed with 81 g of DM water to form uniformed zeolite slurry. The peptized slurry was mixed with zeolites slurry for 2 hours to make final slurry. The slurry was spray dried at inlet temperature of 380 °C and outlet temperature of 170 °C to form a spherical microsphere in a co-current spray dryer unit. The spray-dried catalyst was calcined at 550 °C for 2 hours in an inert atmosphere to form the final RFCC catalyst. The biochar was burnt off during the calcination process, leaving behind hierarchical pores.

### Example-8:

Table 1 shows the physiochemical properties of matrix materials such as clay and Si-doped alumina before and after desilication. The surface area, pore volume, and pore size increased after desilication in the case of clay as well as Si-doped alumina. The acidity of kaolin clay decreased whereas the acidity of Si-doped alumina increased.

**Table 1: Physico-chemical properties of the desilicated matrix materials**

| Matrix Material | Surface area (m²/g) | PV (cc/g) | Average pore diameter (nm) | Acidity µmol/g of NH₃ | Pore Volume % (> 50 Å pore diameter) |
|---|---|---|---|---|---|
| Kaolin clay | 16.7 | 0.043 | 10.3 | 254.7 | 69 |
| Desilicated kaolin clay | 20.4 | 0.052 | 11.0 | 232.4 | 75 |
| Si (40 %)-doped alumina | 264.1 | 0.50 | 7.61 | 1123.3 | 78 |
| Desilicated Si-doped alumina | 285.6 | 0.58 | 8.13 | 1255.8 | 81 |

### Example-9:

**Table 2: Physico-chemical properties of the RFCC catalyst composition of Examples 3, 4, 5, 6 and 7.**

| S. No. | Properties | Commercial catalyst | Example 3 | Example 4 | Example 5 | Example 6 | Example 7 |
|---|---|---|---|---|---|---|---|
| 1. | Total Surface Area, m²/g | 300.1 | 304.3 | 330.8 | 318.5 | 324.4 | 353.8 |
| 2. | Micropore SA, m²/g | 191.5 | 165.4 | 147.1 | 158.7 | 160.6 | 136.6 |
| 3. | Mesopore SA, m2/g | 108.6 | 138.9 | 187.7 | 159.8 | 163.9 | 197.3 |
| 4. | Pore Volume, m³/g | 0.22 | 0.29 | 0.31 | 0.29 | 0.32 | 0.38 |
| 5. | ABD, g/cc | 0.77 | 0.76 | 0.75 | 0.76 | 0.76 | 0.77 |
| 6. | Attrition Index, % (ASTM D5757) | 4.2 | 5.4 | 4.3 | 4.2 | 4.6 | 4.0 |
| 7. | APS, micron | 76.3 | 77.2 | 79.9 | 80.6 | 81.3 | 83 |
| 8. | Zeolite crystallinity, % | 31.78 | 27.9 | 27.5 | 27.4 | 27.7 | 27.8 |
| 9. | UCS, Å | 24.64 | 24.64 | 24.65 | 24.65 | 24.64 | 24.65 |
| 10. | LOI at 950°C, wt% | 5.0 | 3.0 | 4.2 | 4.0 | 3.9 | 4.4 |
| 11. | Chemical composition | | | | | | |
| | SiO₂, wt% | 43.8 | 45.0 | 42.3 | 43.9 | 42.2 | 42.9 |
| | Al₂O₃, wt% | 49.9 | 48.7 | 48.9 | 48.2 | 48.0 | 48.3 |
| | RE, wt% | 2.9 | 2.64 | 2.59 | 2.58 | 2.59 | 2.64 |
| 12. | Total acidity, µmol/g of NHs | 936 | 1012 | 1009 | 1002 | 1010 | 1000 |
| 13. | Pore Volume % (> 50 Å pore diameter) | 64 | 65 | 72 | 75 | 73 | 80 |

### Example-10:

The prepared catalyst from Example 7 is deactivated in 80 % steam at 815 °C for 5 hours before evaluation. Experimental verification of the functionality of the catalyst was undertaken for two feeds whose properties are described in Table 3. The feed-1 comprises a sulfur content of approximately 2.05 wt.%, a density of 0.925 gm/cc, and a CCR of 1.40 %. The feed-2 comprises a sulfur content of approximately 1.40 wt.%, a density of 0.923 gm/cc, and a CCR of 3.80 %.

A fluidized bed catalytic cracking reactor was loaded with the synthesized catalyst. The reaction of the hydrocarbon stream in the fluidized bed reactor was carried out at a C/O ratio of 6, a temperature of 540 °C, and at atmospheric pressure. The effluent from the fluidized bed catalytic cracking reactor was sent to a gas-liquid separator where the gas and liquid hydrocarbon products were separated for analysis. Table 3 presents the typical properties of feed and Table 4 presents the product yields from the conversion of feed 1 and feed 2. For comparison purposes, the performance of the commercial catalyst was tested under the same conditions in the fluidized bed catalytic cracking reactor, and the results are also provided in Table 4.

**Table 3: Feed properties**

| **Properties** | **Feed-1** | **Feed-2** |
|---|---|---|
| Density at 15 °C, gm/cc | 0.925 | 0.923 |
| Sulphur, wt.% | 2.05 | 1.40 |
| CCR, wt.% | 1.40 | 3.80 |

| ASTM-7169 Distillation, wt.% | | |
|---|---|---|
| IBP | 283 | 361 |
| 5 | 290.4 | 411 |
| 10 | 315.9 | 427.6 |
| 30 | 369.4 | 463.2 |
| 50 | 413.34 | 498.8 |
| 70 | 459.11 | 549.8 |
| 90 | 540.19 | 625.4 |
| 95 | 588.70 | 664.6 |

**Table 4: ACE test results over the commercial RFCC and RFCC of the present invention.**

| **Parameters** | **Commercial RFCC** | | **RFCC** | |
|---|---|---|---|---|
| | **Feed-1** | **Feed-2** | **Feed-1** | **Feed-2** |
| ROT (deg C) | 540 | 540 | 540 | 540 |
| Cat/oil (wt./wt. | 6.0 | 6.0 | 6.0 | 6.0 |
| Catalyst Load, gm | 7.5 | 7.5 | 7.5 | 7.5 |
| Conversion (wt.%) | 73.79 | 84.19 | 73.89 | 85.34 |
| Coke (wt.%) | 8.23 | 11.38 | 6.34 | 9.85 |
| Dry Gas | 4.42 | 4.64 | 3.77 | 3.16 |
| LPG (wt.%) | 23.12 | 23.2 | 18.44 | 22.86 |
| Gasoline (wt.%) | 38.02 | 44.67 | 45.35 | 49.47 |
| LCO | 13.68 | 9.35 | 15.43 | 9.02 |
| Bottoms | 12.53 | 6.49 | 10.67 | 5.64 |

### Example-11: Deactivation of catalyst:

50 gm of the catalytic cracking catalyst produced from repetitive experiments of Example-7, Ni, and V were introduced at 5000, and 3000 ppm, respectively. Ni, and V were introduced by the method wherein the compound precursors in the form of naphthenate were dissolved in toluene, supported on the catalyst using a cycle deactivation unit, and dried. The process includes deactivation, regeneration, and reduction cycle. The deactivation cycle includes 60 % steam at 815 °C while the regeneration process includes treatment of the catalyst with N₂ + O₂ gases. The process includes many cycles of deactivation and regeneration which takes 20 hours duration. The reduction cycle includes treatment of the catalyst with H₂ for 5 minutes. After many cycles of deactivation, regeneration, and reduction, finally deactivated RFCC was produced. A similar process was used for the deactivation of commercial catalyst. The metal-deactivated commercial as well as the synthesized catalyst were evaluated with feed 2 and tabulated in Table 5.

**Table 5. ACE test results over the commercial RFCC catalyst and the RFCC catalyst of the present invention**

| **Parameters** | **Commercial RFCC** | **RFCC** |
|---|---|---|
| | Feed-2 | Feed-2 |
| ROT (deg C) | 540 | 540 |
| Cat/oil (wt./wt. | 10.7 | 10.7 |
| Catalyst Load, gm | 7.5 | 7.5 |
| Conversion (wt.%) | 73.4 | 73.58 |
| Coke (wt.%) | 10.7 | 10.65 |
| Dry Gas | 3.52 | 2.40 |
| LPG (wt.%) | 13.5 | 15.01 |
| Gasoline (wt.%) | 45.42 | 45.5 |
| LCO | 14.0 | 14.58 |
| Bottoms | 12.89 | 11.86 |

A review of Table 2 indicates that the desilicated matrix and biochar template increased the mesopore surface area pore volume in the final catalyst. The improvement in mesopore surface area and pore volume indicates creation of hierarchical structure due to partially removal of Si or voids which was created after burning-off of bio-char. The increased pore volume diminishes the diffuse limitation of bigger molecule of hydrocarbons and reduced secondary reaction during the processes which resulted low coke and dry gas. In addition, the desilicated processes increased the acidity of the final catalyst and improved the performance of catalyst.

A review of Table 4 indicates the coke yield ranging from 6-10 wt.% and dry gas yield ranging from 3-4 wt.% for the synthesized catalyst in comparison to 8-12 wt.% and 4-5 wt.% respectively for commercial catalyst. The synthesized catalyst also provides a higher gasoline yield (ranging 45-50 wt.%) in comparison to the commercial catalyst (38-45 wt.%). In addition, the bottom yield is also reduced in the case of synthesized catalysts compared to commercial catalyst. It is therefore established that the synthesized catalyst of the present invention products provides enhanced value in comparison to commercial catalyst for cracking the Resid oil.

A review of Table 5 indicates that after metal deactivation, the invented catalyst showed better results in the case of coke and dry yield selectivity with improved conversion. The invented catalyst also shows higher gasoline yield with less bottom yield. It is therefore established that the synthesized catalyst of the present invention products provides enhanced value in comparison to commercial catalyst for cracking the Resid oil.

## Claims

1. A resid fluid catalytic cracking (RFCC) catalyst composition, comprising:
(a) high dense alumina in a range of 2 wt.% to 12 wt.%;
(b) silica or silica doped alumina or rare-earth doped alumina in a range of 5 wt.% to 25 wt.%;
(c) binder grade alumina in a range of 5 wt.% to 35 wt.%;
(d) colloidal silica in a rage of 5 wt.% to 25 wt.%;
(e) clay in a range of 10 wt.% to 50 wt.%;
(f) biomass waste in a range of 0.5 wt.% to 10 wt.%; and
(g) rare-earth Y zeolite in a range of 1 wt.% to 40 wt.%.

2. The composition as claimed in claim 1, wherein the rare-earth doped alumina has rare earth element in the range of 1 wt.% to 15 wt.%; wherein the rare-earth Y zeolite has rare earth element in the range of 1 wt.% to 20 wt.%; and wherein the rare-earth element is selected from a group consisting of lanthanum and cerium.

3. The composition as claimed in claim 1 or 2, wherein the high dense alumina is selected from boehmite, gamma alumina and alpha boehmite, and having bulk density above 0.9 g/cc.

4. The composition as claimed in any one of claims 1-3, wherein the binder grade alumina is pseudoboehmite; wherein the biomass waste is selected from a group consisting of lignin and biochar; and wherein the clay is selected from a group consisting of kaolin clay, bentonite, mulite and attapulgite.

5. The composition as claimed in any one of claims 1-4, wherein the silica-doped alumina and the clay are in desilicated form; and the rare earth-doped alumina is in dealuminated form.

6. The composition as claimed in any one of claims 1-5, wherein volume distribution of pores of the catalyst composition with diameters 0-30 Å is 2 to 5 %, 30-60 Å is 10 to 20 %, and more than 50 Å are 60 to 80 %.

7. A process for preparation of resid fluid catalytic cracking (RFCC) catalyst composition, comprising:
i) mixing of high dense alumina, silica or rare-earth doped alumina, binder grade alumina, colloidal silica, clay and biomass waste followed by milling for 3-6 hours to form a uniform slurry;
ii) peptizing the slurry with monoprotonic acid to obtain a peptized slurry;
iii) mixing rare-earth Y zeolite (REY-zeolite) and water to obtain a uniform zeolite slurry;
iv) mixing the peptized slurry with the zeolites slurry for 1-3 hours to make a final slurry;
v) spray drying the final slurry at an inlet temperature of 300-400 °C and an outlet temperature of 150-200 °C to form spherical microsphere of spray-dried catalyst;
vi) calcining the spray-dried catalyst at 500-600 °C for 1-3 hours in an inert atmosphere to form the RFCC catalyst composition.

8. The process as claimed in claim 7, wherein the resid fluid catalytic cracking (RFCC) catalyst composition, comprising: (a) high dense alumina in a range of 2 wt.% to 12 wt.%; (b) silica or silica doped alumina or rare-earth doped alumina in a range of 5 wt.% to 25 wt.%; (c) binder grade alumina in a range of 5 wt.% to 35 wt.%; (d) colloidal silica in a rage of 5 wt.% to 25 wt.%; (e) clay in a range of 10 wt.% to 50 wt.%; (f) biomass waste in a range of 0.5 wt.% to 10 wt.%; and (g) rare-earth Y zeolite in a range of 1 wt.% to 40 wt.%.

9. The process as claimed in claim 8, wherein the rare-earth doped alumina has rare earth elements in the range of 1 wt.% to 15 wt.%; wherein the rare-earth Y zeolite has rare earth element in the range of 1 wt.% to 20 wt.%; and wherein the rare-earth element is selected from a group consisting of lanthanum and cerium.

10. The process as claimed in any one of claims 7-9, wherein the high dense alumina is selected from boehmite, gamma alumina and alpha boehmite, and having bulk density above 0.9 g/cc.

11. The process as claimed in any one of claims 7-10, wherein the binder grade alumina is pseudoboehmite; wherein the biomass waste is selected from a group consisting of lignin and biochar; and wherein the clay is selected from a group consisting of kaolin clay, bentonite, mulite and attapulgite.

12. The process as claimed in any one of claims 8-11, wherein the silica-doped alumina and the clay are in desilicated form; and the rare earth-doped alumina is in dealuminated form.

13. The process as claimed in any one of claims 7-12, wherein the mono-protonic acid is selected from a group consisting of HCOOH, CH₃COOH, HNO₃, and HCl.

14. The process as claimed in any one of claims 7-13, wherein volume distribution of pores of the catalyst composition with diameters 0-30 Å is 2 to 5 %, 30-60 Å is 10 to 20 %, and more than 50 Å are 60 to 80 %.
